# EUROPEAN PATENT SPECIFICATION

(11) **EP 2 923 400 B1**
(45) Date of publication and mention of the grant of the patent: **26.05.2021**
(21) Application number: 13802560.6
(22) Date of filing: 26.11.2013
(51) Int. Cl.: C08K 5/18, C08K 5/3415, C08K 5/3432, H01M 4/485, H01M 4/36, H01M 4/62, H01M 4/1391, H01M 10/0525, H01M 10/0567, H01M 10/42, H01M 4/04

(54) **REDUCTION OF GASSING IN LITHIUM TITANATE CELLS**
REDUKTION VON BEGASUNG IN LITHIUMTITANATZELLEN
RÉDUCTION DE DÉGAGEMENT GAZEUX DANS DES CELLULES EN TITANATE DE LITHIUM

(30) Priority: 26.11.2012 GB 201221217
(43) Date of publication of application: 30.09.2015
(73) Proprietor: Leclanché S.A., 1400 Yverdon-les-Bains (CH)
(72) Inventor: BUQA, Hilmi, CH-5036 Oberentfelden (CH); SCHEIFELE, Werner, 77704 Oberkirch (DE); HOLZAPFEL, Michael, 76532 Baden-Baden (DE); WUSSLER, Sabine, 77652 Offenburg (DE); STUDENIK, Erika, 77731 Willstätt (DE); BLANC, Pierre, CH-1400 Yverdon-les-Bains (CH)
(74) Representative: Tegethoff, Sebastian
(86) International application number: PCT/EP2013/074760
(87) International publication number: WO 2014/080039

(56) References cited:
- WO-A1-2012/008539
- WO-A1-2012/086340
- JP-A- 2012 009 268
- JSR Micro: "High adhesive strength results in lower binder loading to improve battery performance Water-based binders Advanced SBR Latex for Anode", www.JSRMicro.be , 26 June 2012 (2012-06-26), XP055104653, Retrieved from the Internet: URL:http://www.jsrmicro.be/cms/uploads/JSR Water Based Binder Brochure.pdf [retrieved on 2014-02-27]
- BINH TRAN ET AL: "Adhesive PEG-based binder for aqueous fabrication of thick Li4Ti5O12 electrode", ELECTROCHIMICA ACTA, vol. 88, 2 November 2012 (2012-11-02), pages 536-542, XP055103550, ISSN: 0013-4686, DOI: 10.1016/j.electacta.2012.10.139
- ELINA POHJALAINEN ET AL: "Water soluble binder for fabrication of Li4Ti5O12 electrodes", JOURNAL OF POWER SOURCES, vol. 226, 8 November 2012 (2012-11-08), pages 134-139, XP055104900, ISSN: 0378-7753, DOI: 10.1016/j.jpowsour.2012.10.083
- ARIANNA MORETTI ET AL: "Investigation of different binding agents for nanocrystalline anatase TiO2 anodes and its application in a novel, green lithium-ion battery", JOURNAL OF POWER SOURCES, vol. 221, 21 August 2012 (2012-08-21), pages 419-426, XP055104903, ISSN: 0378-7753, DOI: 10.1016/j.jpowsour.2012.07.142
- I. BELHAROUAK ET AL: "Performance Degradation and Gassing of Li4Ti5O12/LiMn2O4 Lithium-Ion Cells", JOURNAL OF THE ELECTROCHEMICAL SOCIETY, vol. 159, no. 8, 20 July 2012 (2012-07-20) , pages A1165-A1170, XP055104466, ISSN: 0013-4651, DOI: 10.1149/2.013208jes

## Description

### Field of the Invention

The field of the invention relates to the reduction of gassing in a lithium titanate cell, a method for the preparation of electrodes leading to reduced gassing, manufacturing of a titanate-based lithium cell comprising such electrodes, and the manufactured electrochemical cell.

### Background of the invention

Beyond consumer electronics, Li-ion batteries are experiencing an increasing popularity for stationary applications such as storage of renewable energy, grid levelling, large hybrid diesel engines, military, hybrid electric vehicles (HEV), and aerospace applications due to their high energy density.

The electrolyte is a critical component in lithium batteries, as it allows its functioning by lithium-ion conduction for charge equilibration at charge/discharge. The electrolyte is thermodynamically not stable at the anode and cathode surface in the charged state of the battery. A lithium-ion battery can only function correctly as there is a solid electrolyte interface (SEI) formed on the surface of the graphite anode which permits Li⁺-conduction, while hindering the electrolyte from diffusing to the anode surface. A SEI is also formed on the surface of the cathode, which is, however, less well investigated.

Lithium titanate (LTO, Li₄Ti₅O₁₂) can be used as an alternative anode material replacing graphite. It allows for obtaining extremely safe lithium batteries that will not catch fire or explode in case of thermal problems or short circuit. Lithium titanate cells also show a very high cycle lifetime. This has several reasons: One of these reasons is that no or only a very thin SEI is formed. The electrolyte is generally considered to be stable at the working potential of a lithium titanate anode, but this is questionable regarding the findings described below.

Lithium-ion batteries show a significant gas evolution during their first cycle (the so-called formation cycle). This gas evolution is due to the SEI formation on the graphite anode. Once the SEI is formed, no gas will be developed during further cycling. This is due to the fact that eventually the reduction of traces of electrolyte on the graphite surface generally creates solid or liquid products that are dissolved in the electrolyte or deposited in/on the SEI, but no more gases are formed which could accumulate.

The situation is different in cells containing a lithium titanate anode. Here, a very slight reaction occurs on continuous cycling in the course of which gaseous products are formed, which are only slightly soluble in the electrolyte and, thus, accumulate. These gases are mostly hydrogen, CO, CₓH_{y}, CO₂. They can form an internal pressure in a cell with a hard case or swelling in the case of a pouch cell. Both phenomena are undesirable and can lead to safety problems and limited cycling stability, respectively.

The exact mechanism for the formation of these gasses is not exactly known, but it is believed that electrolyte solvents are reduced by Ti³⁺ ions on the surface of the lithium titanate in a catalytic mechanism. This is supported by the fact that gassing is increased, when the titanate is fully charged or the cell is heated (easier diffusion of the solvent, faster reaction).

It is known that film-forming additives such as vinylene carbonate (VC) and propane sultone (PS) reduce the gassing in titanate batteries due to the formation of a relatively thick SEI. These additives are reported to be effective in concentrations generally larger than 1% in the electrolyte; as for lower concentrations no effective SEI is formed.

The binder material is also one of the crucial components for an improved cell performance. The poly(vinylidene fluoride) (PVdF) product has been most widely adopted as a binder for electrodes in Li-ion batteries. It has a strong binding strength, but its low flexibility can easily deteriorate cycle life of the battery due to breaking of the bond between the active particles upon their dilatation/contraction during lithiation/delithiation. To absorb these stresses and extend the shelf life, it is necessary to choose an elastic binder. In addition, it has to be noted that a binder like PVdF is only soluble in a solvent, which is hazardous for humans and the environment.

Different approaches are used to reduce the gassing of lithium titanate based lithium batteries. A formation cycle with a higher potential pushes the potential of the lihium titanate anode below 1,0 V and the formation of a SEI on the titanate surface is forced. In this manner the direct contact between electrolyte solvent and titanate surface is reduced during continued cycling. Another approach is the addition of additives to the electrolyte that form a SEI, like VC or PS as already described above. Thus, a SEI is formed, and the direct contact between electrolyte solvent and titanate surface is reduced. Alternatively adding functional additives, which react directly with the LTO, can modify the surface of the LTO.

Published Japanese Patent Application No. JP 2012-009268 A discloses an aqueous composition for an electrode for a secondary battery the composition including an electrode active material, binder and water as essential components. This document does not disclose fluorine acrylic hybrid latex as part of a formulation for the preparation of an electrode.

Published U.S. Patent Application No. US 2013/0286545 A1 teaches an electricity storage device having a negative electrode (cathode) active material layer containing a fluorine-containing acrylic binder. This document does neither disclose fluorine acrylic hybrid latex for the preparation of an electrode nor a combination of CMC with PVDF.

All these approaches have disadvantages: The use of a higher potential during the formation cycle and the use of VC or PS increases the ohmic resistance in the cell and lower the cycling efficiency. Propane sultone is carcinogenic. The modification of the titanate surface can also lead to higher ohmic resistance and less cycling stability.

Thus, there is a need to provide means for reducing gassing in a lithium titanate cell avoiding the above-mentioned disadvantages.

### Object of the invention

It is an object of the present invention to reduce gassing in lithium titanate cells.

### Description of the invention

The present invention provides a method for the preparation of an electrode for a lithium titanate cell, comprising the use of fluorine acrylic hybrid latex, wherein fluorine and acrylate polymers are hybridized in a particle and such particles are dispersed in an aqueous solution, with lithium nickel cobalt aluminum oxide or titanate in combination with CMC and PVDF for the preparation of at least one electrode of an electrochemical cell.

The anode active material can be selected from the group comprising Li₄Ti₅O₁₂, Li₂Ti₃O₇, LiₓTiO₂, TiO₂, TiO₂(OH)ₓ and mixtures thereof, wherein the anode active material can additionally be coated with carbon.

The anode active material can be a mixture of the above-mebtioned anode active material and carbonaceous material, wherein the carbonaceous material is selected from the group comprising graphite, hard carbon, amorphous carbon, carbon-containing core-shell material and silicon containing material.

The cathode active material can be selected from the group comprising LiCoO₂, LiNiO₂, LiNi₁-x-yCoxMnyO₂, LiNi₁-x-yCoxAlyO₂, LiMn₂O₄, LiM2-xMn₄-yO₄, LiMPO₄, wherein M comprises Fe, Mn, Co or Ni, LiAyMxPO₄, wherein A comprises B, P, Si, Ti, Zr, Hf, Cr, Mo or W, and mixtures thereof, wherein the cathode active material can additionally be coated with carbon, oxides or phosphates.

Another object of the present invention is an electrode prepared by a method as described above.

Further, an electrochemical cell comprising an electrode made of fluorine acrylic hybrid latex, wherein fluorine and acrylate polymers are hybridized in a particle and such particles are dispersed in an aqueous solution, with lithium nickel cobalt aluminum oxide or titanate in combination with CMC and PVDF and further comprising a film-forming additive selected from the group comprising vinylene carbonate, vinyl ethylene carbonate, propane sultone, is another object of the invention.

The electrochemical cell can comprise a gas-reducing additive selected from the group comprising N-containing heterocycles, such as pyrrole, 2-methyl-1-pyrroline, 1-methylpyrroline and 1-vinyl-2-pyrrolidinone, pyridine, 2-picoline, 3-picoline, 4-picoline, 2-vinylpyridine, 4-vinylpyridine, and dimethyl-pyridine-amine (DMPA) and boran-pyridine-complex or mixtures thereof or aminated aromatic compounds such as aniline, toluidine, diphenylamine, naphtylamine, alkylanilines, dialkylaniline

The the electrochemical cell electrolyte can comprises an electrolyte salt, an electrolyte solvent and an electrolyte additive, wherein the electrolyte salt is selected from the group comprising lithium perchlorate (LiClO₄), lithium hexafluorophosphate (LiPF₆), lithium tetrafluoroborate (LiBF₄), lithium hexafluoroarsenate (LiAsF₆), lithium hexafluoroantimonate (LiSbF₆), lithium trifluoromethanesulfonate (LiCF₃SO₃), lithium bis[(trifluoromethyl)sulfonyl]imide (LiN(CF₃SO₂)₂), lithium bisoxalatoborate (LiBOB), lithium difluorooxalatoborate (LidFOB), lithium trifluoro tris(pentafluoroethyl)phosphate (LiFAP) and lithium tetraphenylborate (Li(C₆H₅)₄B) and wherein the electrolyte solvent is selected from the group comprising ethylene carbonate (EC), propylene carbonate (PC), vinylene carbonate (VC), linear carbonate such as dimethyl carbonates (DMC), diethyl carbonate (DEC), ethyl methyl carbonate (EMC), cyclic ethers such as tetrahydrofuran (THF) and 2-methyltetrahydrofuran (2-Me-THF), linear ethers such as dimethoxyethane (DME), lactones such as γ-butyrolactone (GBL), valerolactone, acetonitrile and sulfolane and mixtures thereof.

The use of an electrode prepared by a method as described above in consumer electronics, stationary applications as storage of renewable energy, grid levelling, large hybrid diesel engines, military, hybrid electric vehicles (HEV-s), and aerospace applications is another aspect of the invention.

### Detailed description of the invention

It was discovered by the inventors that a change in the solvent and the binders used for the coating of the electrode slurry can minimize the gassing of titanate cells. It has been found out that the change from an organic solvent to a water-based coating significantly reduces the gassing of the cells, regardless whether an additional additive is used or not. This effect can be observed in cells having only the LTO anode coated with a water-based slurry or in cells having both, anode and cathode, coated with water-based slurries.

The reason for this behavior is up to now not exactly known. The use of water changes many parameters. The most important are: i) different binders are used, typically a CMC/SBR-type binder can replace PVdF, ii) eventual reactions on the surface of the active material change. Here, pH of the active materials, typically >10, may play a role.

The switch from non-aqueous to aqueous binders has the following advantages: low cost, no pollution problems, reduction of the binder content, fast drying. Recently, aqueous binders have been commercially used for the graphite anodes, but not yet for the positive electrode or non carbon based anodes.

In the context of this application elastomers were used instead of the traditionally used PVdF binder for the positive electrode, because it permits a high active material ratio in the electrode and shows more elasticity between particles. Furthermore, the electrode composition is prepared in an aqueous solution, which results in economic and environmental advantages.

The conventional, organic based process uses NMP, acetone or DMAC as solvent. The NMP has for example a lower evaporation rate because of its higher boiling point at 196°C and a much lower vapour pressure compared to water, which is the solvent of the water-based process. Therefore, the electrode slurry that is prepared by a NMP-based process takes a longer time to dry than that prepared by the water-based processes. In other words, when drying proceeds at a constant temperature, the organic-based PVDF will be allowed to migrate within the solvent for a longer time than the water-based SBR/SCMC, which possibly results in less uniformity of the PVDF than the SBR/SCMC in the dried electrode sheet.

A non-uniform distribution of the binder might be detrimental to the physical and mechanical properties of electrodes, such as the flexibility and its adhesion on the current collector, and harm the electrical and electrochemical properties of as-manufactured cells. Furthermore, the different dispersion will influence the behaviour of the electrode, e.g. the mechanical and physical properties of dried electrode, the porosity and adhesion strength of the electrode, and finally the electrochemical Properties on the cell performance will be also affected.

The lesser gassing with new water-based binder electrode formulation could be a result of various effects on different electrode properties.

As already mentioned above, the PVDF has a strong binding effect, but low flexibility. The low flexibility of the electrodes prepared with PVDF can easily lead to the breaking of the bond between active materials and conductive additive and consequently expansion/contraction process occurs during charging and discharging. Through such breaking effects, it is possible that new active electrode surface areas are created which can increase the kinetic effects and lead to an increased gassing. Using water based binders, the elastic binder absorbs the expansion and contraction of the active material during repeated cycling.

The water-based binder has also an improved inter-particle binding and shows good adhesion with the current collector. Using the binder formulation comprising fluorine acrylic hybrid latex according to the invention, the electrode/electrolyte interface reactions are different and their stability is improved by direct contact with the electrolyte compared to the PVDF based electrodes. It is assumed that a very thin CMC layer (one part of the Binder) is coated on the active particles and other parts of the binders will act as a rigid binder. As a result, side reactions could be diminished, such as electrolyte oxidation or reduction and corrosion of the active material by the electrolyte or HF and as a result also the gassing will be surprised. Li+-ion exchange between electrolyte and active material is not impeded, as long as the coating is thin enough.

The electrolyte solvent can be selected from the group consisting of ethylene carbonate (EC), propylene carbonate (PC), vinylene carbonate (VC), linear carbonate as dimethyl carbonates (DMC), diethyl carbonate (DEC, ethyl methyl carbonate (EMC), cyclic ethers such as tetrahydrofuran (THF) and 2-methyltetrahydrofuran (2-Me-THF), linear ethers such as dimethoxyethane (DME), lactones such as γ-butyrolactone (GBL), valerolactone, acetonitrile and sulfolane. The electrolyte can contain free or complexed transition metal ions or substances scavenging such free or complexed transition metal ions.

The electrolyte can also contain a film-forming additive such as vinylene carbonate, vinyl ethylene carbonate, propane sultone or the like. It could further contain gas reducing additives such as N-containing heterocycles, such as pyrrole, 2-methyl-1-pyrroline, 1-methylpyrroline and 1-vinyl-2-pyrrolidinone, pyridine, 2-picoline, 3- picoline, 4-picoline, 2-vinylpyridine, 4-vinylpyridine, and dimethyl-pyridine-amine (DMPA) and boran-pyridine-complex or mixtures thereof. The additive can further be selected form the group of aminated aromatic compounds such as aniline, toluidine, diphenylamine, naphtylamine, alkylanilines, dialkylanilines.

The electrolyte salt can be selected from the group consisting of lithium perchlorate (LiClO₄), lithium hexafluorophosphate (LiPF₆), lithium tetrafluoroborate (LiBF₄), lithium hexaflurorarsenate (LiAsF₆), lithium hexafluoroantimonate (LiSbF₆), lithium trifuloromethanesulfonate (LiCF₃SO₃), lithium bis(trifluoromethyl)sulfonylimide (LiN(CF₃SO₂)₂), lithium bis(pentafluoroethyl)sulfonylimide (LiN(C2F₅SO₂)₂), lithium bisoxalatoborate (LiBOB), lithium difluorooxalatoborate (LidFOB), lithium trifluoro tris(pentafluoroethyl)phosphate (LiFAP), lithium tetraphenylborate (Li(C₆H₅)₄B).

The anode active material can be selected from the group consisting of Li₄Ti₅O₁₂, Li₂Ti₃O₇, LiₓTiO₂, TiO₂, TiO₂(OH)ₓ and mixtures thereof. These materials can also be carbon-coated. Further, carbonaceous material (such as graphite, hard carbon, amorphous carbon, carbon-containing core-shell material, silicon containing material) can be used in mixtures with the above mentioned anode active material or on their own.

The lithium titanate-based anode of the battery is cast from a slurry containing water as solvent. The anode can be treated with a proton-absorbing or - releasing substance to modify the pH.

The cathode material can be selected from the group consisting of LiCoO₂, LiNiO₂, LiNi_{1-x-y}CoₓMn_{y}O₂, LiNi_{1-x-y}COₓAl_{y}O₂, LiMn₂O₄, LiM₂₋ₓMn_{4-y}O₄, LiMPO₄, (M comprisiing Fe, Mn,Co, Ni) LiA_{y}MₓPO₄ A = B, P, Si, Ti, Zr, Hf, Cr, Mo, W) and mixtures thereof. These materials can also be coated with carbon or other materials as oxides, phosphates.

The cathode of the lithium titanate-based battery can be cast from a slurry containing organic solvents or water as solvent. The cathode can be treated with a proton-absorbing or -releasing substance to modify the pH.

### Summary of the figures

Figure 1: Comparison of the gas formation through cycling of the Li-NCA/LTO based cell containing electrodes prepared with different electrode (cathode) formulation. The LTO electrode is prepared using water based binders.
Figure 2: Comparison of the gas formation (Floating Method) of the Li-NCA/LTObased cell containing electrodes prepared with different electrode (cathode) formulation. The LTO electrode is prepared using water based binders.
Figure 3: Comparison of the gas formation through cycling of the Li-NCA/LTO based cell containing electrodes prepared with different electrode (cathode) formulation. The LTO electrode is prepared using water based binders.
Figure 4: Comparison of the gas formation (Floating Method) of the Li-NCA/LTO based cell containing electrodes prepared with different electrode (cathode) formulation. The LTO electrode is prepared using water based binders.

### Examples

The invention will be described by examples, methods and figures. It is obvious for a person skilled in the art, that the scope of the present invention will not be limited to the disclosed embodiments.

The cells we used for the testing of the gassing are 16Ah pouch cells with lithium titanate anode (Li₄Ti₅O₁₂) and NCA cathode (lithium nickel cobalt aluminum oxide (LiNi_{1-x-y}CoₓAl_{y}O₂).

The cells are made from laminated bicells, containing one anode and a cathode on either side of the anode, laminates together by a ceramic separator. The separator is made of a porous polymer foil that contains a high amount of ceramic lithium aluminium titanium phosphate.

The electrodes are made by the following way:
1) anode: a slurry containing active material, conductive additive, binder and a solvent is cast on a copper foil. The foil is then dried. The same action is repeated on the other side of the copper foil. The foil is then calandered. The solvent can be water or acetone.
2) cathode: a slurry containing active material, conductive additive binder and a solvent is cast on an aluminium foil. The foil is then dried and calandered. The solvent can be water or acetone.

The bicells are made the following way: Separator foil is laminated on both sides of the anode and then cathode foils are laminated on both sides of the anode/separator assembly.

The bicells are then stacked, Al and Cu tabs are welded on the current collector foils, the stacks put in tabs, filled with electrolyte and sealed. The sealed cells are then tempered, submitted to a formation cycle, aged, end evacuated and the tested for the gassing. The electrolyte is EC/PC (1:3), 1M LiPF₆.

The gassing experiments are conducted as follows. We applied two different methods:

### Method 1: Cycling at elevated temperatures

The volume of the fresh cell is measured. The cells are put in an oven at 45°C and are cycled at a rate of C/2. In regular intervals the cell is taken from the oven and the cell volume is measured again. The difference in volume is reported in the graphs.

### Method 2: Floating in the charged state at elevated temperatures

The volume of the fresh cell is measured. The cells are then put in an oven at 50° and kept at 2,7V, i.e. in the fully charged state. This is to force the gassing of titanate to happen. It is known that gassing of titanate happens is heavier in the charged state and at elevated temperatures. In regular intervals the cell is taken from the oven and the cell volume is measured again. The difference in volume is reported in the graphs.

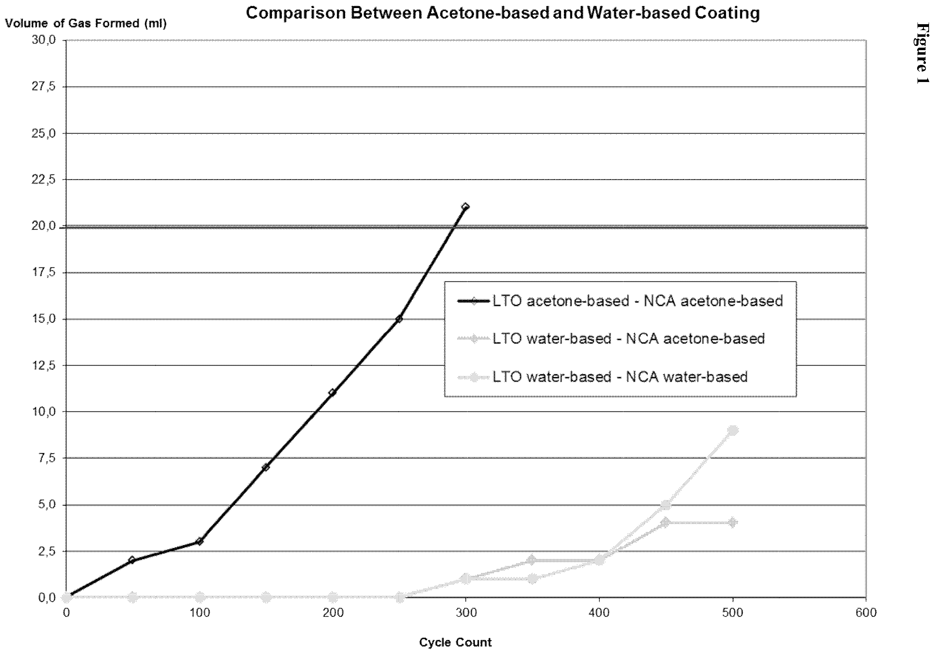

### Example 1 (Fig. 1):

Three cells are compared. One cell has anodes and cathodes that have been coated from acetone-based slurry. One cell has an anode that has been coated from water-based slurry and a cathode that has been coated from an acetone-based slurry. One cell has anodes and cathodes that have been coated from an water-based slurry. Both cells were tested using method 1 for the determination of gassing (cycling at elevated temperatures).

It can be seen that water-based coating of the LTO-anode alone or of both anode and cathode much considerably reduces the gassing of titanate cells.

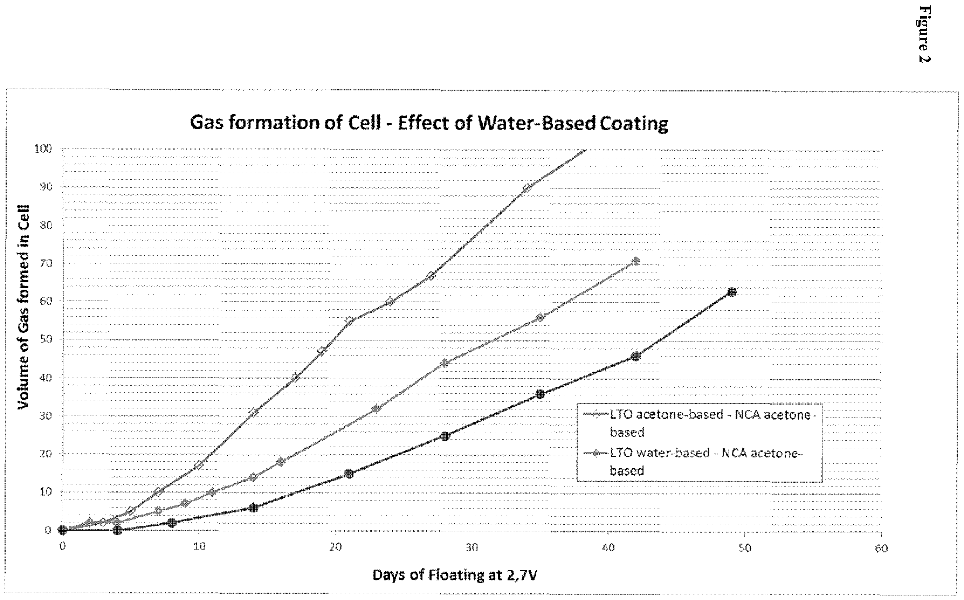

### Example 2 (Fig. 2):

Three cells are compared. One cell has anodes and cathodes that have been coated from acetone-based slurry. One cell has an anode that has been coated from water-based slurry and a cathode that has been coated from an acetone-based slurry. One cell has anodes and cathodes that have been coated from an water-based slurry. Both cells were tested using method 2 for the determination of gassing (floating in charged state at elevated temperatures).

It can be seen that the gassing of the completely acetone-based cells is reduced by coating the LTO anode from water-based slurry. It can also be reduced by coating both, anode and cathode, resp., from a water-based slurry.

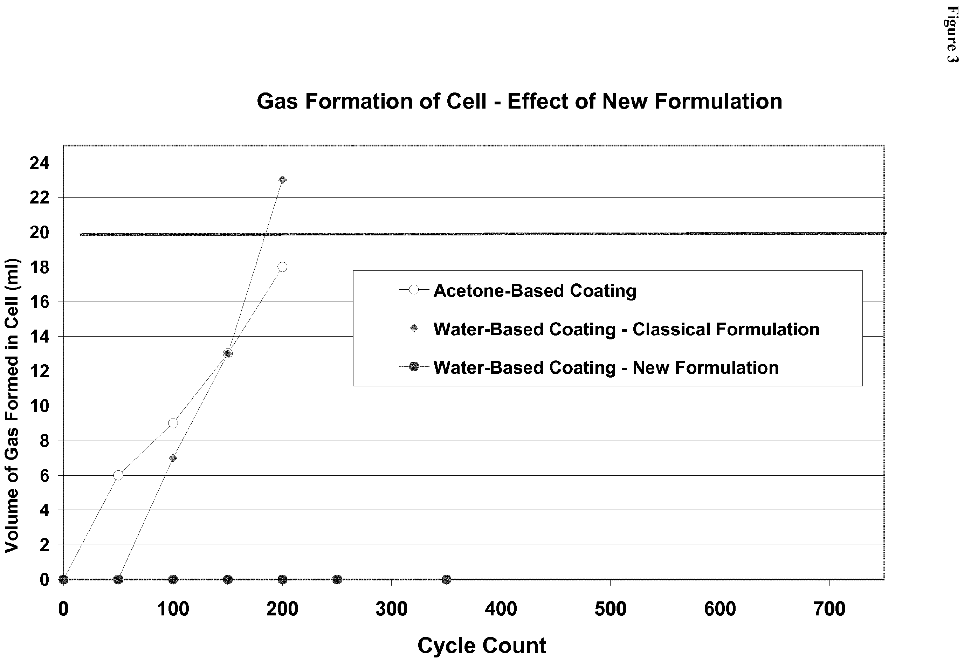

Figures 3 and shows the results of comparing cells that have been prepared using different precursor for preparing the electrodes.

"Classical formulation" designates am NCA electrode, which is prepared using NCA and SBR/CMC/PVDF latex, wherein PVDF latex is a specifically developed PVDF having particles dispersed in an aqueous solution. The new formulation is based on NCA and fluorine acrylic hybrid latex, wherein fluorine and acrylate polymers are hybridized in a particle and such particles are dispersed in an aqueous solution.

The titanate electrode is prepared using a titanate and SBR/CMC/PVDF latex (classical formulation) or titanate and fluorine acrylic hybrid latex/CMC/PVDF in the so-called new formulation.

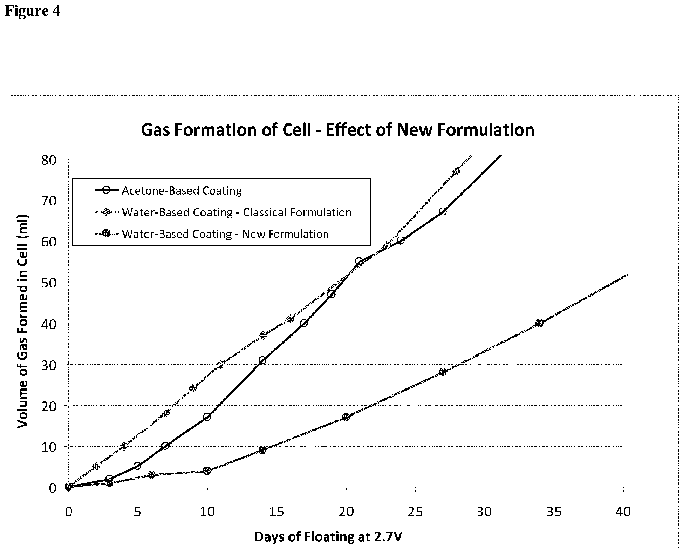

The results in figure 3 and 4 show clearly the effect of the invented water based binder electrode formulation on cell gassing. The advantage of using fluorine acrylic hybrid latex is that it is hydrophilic, has a strong adhesion, is more flexible than SBR, shows an improved electrolyte compatibility, a better oxidation process. Slurries using fluorine acrylic hybrid latex are more homogenous. Besides this the slurries show a higher temperature stability and a lower impedance.

Using the combination of fluorine acrylic hybrid latex and PVDF latex as binder and CMC as a thickener for the slurry results in a much more stable and flexible water-based electrode, which reduces gassing in a cell significantly.

## Claims

1. A method for the preparation of an electrode for a lithium titanate cell, **characterised in that** the method comprises the use of fluorine acrylic hybrid latex, wherein fluorine and acrylate polymers are hybridized in a particle and such particles are dispersed in an aqueous solution, with lithium nickel cobalt aluminum oxide or lithium titanate in combination with CMC and PVDF for the preparation of at least one electrode of an electrochemical cell.

2. The method according to claim 1, wherein the electrode is an anode comprising an anode active material selected from the group comprising Li₄Ti₅O₁₂, Li₂Ti₃O₇, LiₓTiO₂, TiO₂, TiO₂(OH)ₓ and mixtures thereof.

3. The method according to one of claims 1 or 2, wherein the electrode is an anode comprising an anode active material, wherein the anode active material is additionally coated with carbon.

4. The method according to one of claims 1 to 3, wherein the electrode is an anode comprising an anode active material, wherein the anode active material is a mixture of the anode active material according to claims 2 or 3 and carbonaceous material, wherein the carbonaceous material is selected from the group comprising graphite, hard carbon, amorphous carbon, carbon-containing core-shell material and silicon containing material.

5. The method according to claim 1 , wherein the electrode is a cathode comprising a cathode active material, wherein the cathode active material is selected from the group comprising LiCoO₂, LiNiO₂, LiNi_{1-x-y}CoₓMn_{y}O₂, LiN_{il-x-y}CoₓAl_{y}O₂, LiMn₂O₄, LiM₂₋ₓMn_{4-y}O₄, LiMPO₄, wherein M comprises Fe, Mn, Co or Ni, LiA_{y}MₓPO₄, wherein A comprises B, P, Si, Ti, Zr, Hf, Cr, Mo or W, and mixtures thereof.

6. The method according to claim 5, wherein the cathode active material is additionally coated with carbon, oxides or phosphates.

7. An electrochemical cell **characterised in that** it comprises an electrode made of fluorine acrylic hybrid latex, wherein fluorine and acrylate polymers are hybridized in a particle and such particles are dispersed in an aqueous solution, with lithium nickel cobalt aluminum oxide or lithium titanate in combination with CMC and PVDF and further comprising a film-forming additive selected from the group comprising vinylene carbonate, vinyl ethylene carbonate, propane sultone.

8. The electrochemical cell of claim 7, comprising a gas-reducing additive selected from the group comprising N-containing heterocycles, such as pyrrole, 2-methyl-1-pyrroline, 1-methylpyrroline and 1-vinyl-2-pyrrolidinone, pyridine, 2-picoline, 3- picoline, 4-picoline, 2-vinylpyridine, 4-vinylpyridine, and dimethyl-pyridine-amine (DMPA) and boran-pyridine-complex or mixtures thereof or aminated aromatic compounds such as aniline, toluidine, diphenylamine, naphtylamine, alkylanilines, dialkylaniline.

9. The electrochemical cell according to one of claims 7 or 8, wherein the electrochemical cell electrolyte comprises an electrolyte salt, an electrolyte solvent and an electrolyte additive.

10. The electrochemical cell according to one of claims 7 to 9, wherein the electrolyte salt is selected from the group comprising lithium perchlorate (LiClO₄), lithium hexafluorophosphate (LiFP₆), lithium tetrafluoroborate (LiBF₄), lithium hexafluoroarsenate (LiAsF₆), lithium hexafluoroantimonate (LiSbF₆), lithium trifluoromethanesulfonate (LiCF₃SO₃), lithium bis[(trifluoromethyl)sulfonyl]imide (LiN(CF₃SO₂)₂), lithium bis[(pentafluoroethyl)sulfonyl]imide (LiN(C₂F₅SO₂)₂), lithium bisoxalatoborate (LiBOB), lithium difluorooxalatoborate (LidFOB), lithium trifluoro tris(pentafluoroethyl)phosphate (LiFAP) and lithium tetraphenylborate (Li(C6H5)4B).

11. The electrochemical cell according to one of claims 7 to 10, wherein the electrolyte solvent is selected from the group comprising ethylene carbonate (EC), propylene carbonate (PC), vinylene carbonate (VC), linear carbonate such as dimethyl carbonates (DMC), diethyl carbonate (DEC), ethyl methyl carbonate (EMC), cyclic ethers such as tetrahydrofuran (THF) and 2-methyltetrahydrofuran (2-Me-THF), linear ethers such as dimethoxyethane (DME), lactones such as γ-butyrolactone (GBL), valerolactone, acetonitrile and sulfolane and mixtures thereof.

12. A use of an electrode prepared by a method according to one of claims 1 to 6 in consumer electronics, stationary applications as storage of renewable energy, grid levelling, large hybrid diesel engines, military, hybrid electric vehicles (HEV-s), and aerospace applications.

## Patentansprüche

1. Verfahren zur Herstellung einer Elektrode für eine Lithium-Titanat-Zelle, **dadurch gekennzeichnet, dass** das Verfahren die Verwendung von Fluor-Acryl-Hybridlatex umfasst, wobei Fluor- und Acrylat-Polymere in einem Teilchen hybridisiert sind und solche Teilchen in einer wässrigen Lösung dispergiert sind, mit Lithium-Nickel-Kobalt-Aluminiumoxid oder Lithium-Titanat in Kombination mit CMC und PVDF zur Herstellung von mindestens einer Elektrode einer elektrochemischen Zelle.

2. Verfahren nach Anspruch 1, wobei die Elektrode eine Anode ist, die ein anodenaktives Material umfasst, das aus der Gruppe ausgewählt ist, die Li₄Ti₅O₁₂, Li₂Ti₃O₇, LiₓTiO₂, TiO₂, TiO₂(OH)ₓ und Mischungen davon umfasst.

3. Verfahren nach einem der Ansprüche 1 oder 2, wobei die Elektrode eine Anode mit einem anodenaktiven Material ist, wobei das anodenaktive Material zusätzlich mit Kohlenstoff beschichtet ist.

4. Verfahren nach einem der Ansprüche 1 bis 3, wobei die Elektrode eine Anode ist, die ein anodenaktives Material umfasst, wobei das anodenaktive Material eine Mischung aus dem anodenaktiven Material nach Anspruch 2 oder 3 und kohlenstoffhaltigem Material ist, wobei das kohlenstoffhaltige Material ausgewählt ist aus der Gruppe, die Graphit, harten Kohlenstoff, amorphen Kohlenstoff, kohlenstoffhaltiges Kern-Schale-Material und siliziumhaltiges Material umfasst.

5. Verfahren nach Anspruch 1, wobei die Elektrode eine Kathode ist, die ein kathodenaktives Material umfasst, wobei das kathodenaktive Material ausgewählt ist aus der Gruppe umfassend LiCoO₂, LiNiO₂, LiNi_{1-x-y}CoₓMn_{y}O₂, LiNi_{1-x-y}CoₓAl_{y}O₂, LiMn₂O₄, LiM₂₋ₓMn_{4-y}O₄, LiMPO₄, wobei M Fe, Mn, Co oder Ni umfasst, LiA_{y}MₓPO₄, wobei A B, P, Si, Ti, Zr, Hf, Cr, Mo oder W umfasst, und Mischungen davon.

6. Verfahren nach Anspruch 5, wobei das kathodenaktive Material zusätzlich mit Kohlenstoff, Oxiden oder Phosphaten beschichtet ist.

7. Elektrochemische Zelle, **dadurch gekennzeichnet, dass** sie eine Elektrode aus Fluor-Acryl-Hybridlatex umfasst, wobei Fluor- und Acrylatpolymere in einem Teilchen hybridisiert sind und solche Teilchen in einer wässrigen Lösung dispergiert sind, mit Lithium-Nickel-Kobalt-Aluminiumoxid oder Lithium-Titanat in Kombination mit CMC und PVDF und ferner umfassend ein filmbildendes Additiv, ausgewählt aus der Gruppe, die Vinylencarbonat, Vinylethylencarbonat, Propansulton.

8. Elektrochemische Zelle nach Anspruch 7, umfassend ein gasreduzierendes Additiv, ausgewählt aus der Gruppe umfassend N-haltige Heterocyclen, wie Pyrrol, 2-Methyl-l-pyrrolin, 1-Methylpyrrolin und 1-Vinyl-2-pyrrolidinon, Pyridin, 2-Picolin, 3-Picolin, 4-Picolin, 2-Vinylpyridin, 4-Vinylpyridin und Dimethyl-Pyridin-Amin (DMPA) und Boran-Pyridin-Komplex oder Mischungen davon oder aminierte aromatische Verbindungen wie Anilin, Toluidin, Diphenylamin, Naphthylamin, Alkylaniline, Dialkylanilin.

9. Elektrochemische Zelle nach einem der Ansprüche 7 oder 8, wobei der Elektrolyt der elektrochemischen Zelle ein Elektrolytsalz, ein Elektrolytlösungsmittel und ein Elektrolytzusatzmittel umfasst.

10. Elektrochemische Zelle nach einem der Ansprüche 7 bis 9, wobei das Elektrolytsalz ausgewählt ist aus der Gruppe umfassend Lithiumperchlorat (LiClO₄), Lithiumhexafluorophosphat (LiPF₆), Lithiumtetrafluorborat (LiBF₄), Lithiumhexafluorarsenat (LiAsF₆), Lithiumhexafluorantimonat (LiSbF₆), Lithiumtrifluormethansulfonat (LiCF₃ SO₃), Lithiumbis[(trifluormethyl)sulfonyl]imid (LiN(CF₃SO₂)₂), Lithiumbis[(pentafluorethyl)sulfonyl]imid (LiN(C₂F₅SO₂)₂), Lithiumbisoxalatoborat (LiBOB), Lithiumdifluoroxalatoborat (LidFOB), Lithiumtrifluor-tris(pentafluorethyl)phosphat (LiFAP) und Lithiumtetraphenylborat (Li(C₆H₅)₄B).

11. Elektrochemische Zelle nach einem der Ansprüche 7 bis 10, wobei das Elektrolytlösungsmittel ausgewählt ist aus der Gruppe, die Ethylencarbonat (EC), Propylencarbonat (PC), Vinylencarbonat (VC), lineares Carbonat wie Dimethylcarbonate (DMC), Diethylcarbonat (DEC), Ethylmethylcarbonat (EMC), cyclische Ether wie Tetrahydrofuran (THF) und 2-Methyltetrahydrofuran (2-Me-THF), lineare Ether wie Dimethoxyethan (DME), Lactone wie γ-Butyrolacton (GBL), Valerolacton, Acetonitril und Sulfolan und Mischungen davon.

12. Verwendung einer nach einem Verfahren gemäß einem der Ansprüche 1 bis 6 hergestellten Elektrode in der Unterhaltungselektronik, in stationären Anwendungen als Speicher für erneuerbare Energie, zur Netzausgleichung, in großen Hybrid-Dieselmotoren, im Militär, in Hybrid-Elektrofahrzeugen (HEV-s) und in Anwendungen in der Luft- und Raumfahrt.

## Revendications

1. Procédé de préparation d'une électrode destinée à une cellule au titanate de lithium, **caractérisé en ce que** le procédé comprend :
l'utilisation de latex hybride d'acrylique et de fluor, selon laquelle des polymères d'acrylate et de fluor sont hybridés en une particule et de telles particules sont dispersées dans une solution aqueuse, avec de l'oxyde de lithium nickel cobalt d'aluminium ou du titanate de lithium, en combinaison avec de la CMC et du PVDF pour la préparation d'au moins une électrode d'une cellule électrochimique.

2. Procédé selon la revendication 1, selon lequel l'électrode est une anode comprenant un matériau à activité d'anode choisi dans le groupe comprenant du Li₄Ti₅O₁₂, Li₂Ti₃O₇, LiₓTiO₂, TiO₂, TiO₂(OH)ₓ et des mélanges de ceux-ci.

3. Procédé selon la revendication 1 ou la revendication 2, selon lequel l'électrode est une anode comprenant un matériau à activité d'anode, selon lequel le matériau à activité d'anode est en outre revêtu de carbone.

4. Procédé selon l'une quelconque des revendications 1 à 3, selon lequel l'électrode est une anode comprenant un matériau à activité d'anode, selon lequel le matériau à activité d'anode est un mélange du matériau à activité d'anode selon les revendications 2 ou 3 et du matériau carboné, selon lequel le matériau carboné est choisi dans le groupe comprenant du graphite, du carbone dur, du carbone amorphe, du matériau à cœur/coquille contenant du carbone et du matériau contenant du silicium.

5. Procédé selon la revendication 1, selon lequel l'électrode est une cathode comprenant un matériau à activité de cathode, selon lequel le matériau à activité de cathode est choisi dans le groupe comprenant du LiCoO₂, LiNiO₂, LiNi_{1-x-y}CoₓMn_{y}O₂, LiNi_{1-x-y}CoₓAl_{y}O₂, LiMn₂O₄, LiM₂₋ₓMn_{4-y}O₄, LiMPO₄, selon lequel M comprend du Fe, Mn, Co ou Ni, LiA_{y}MₓPO₄, selon lequel A comprend du B, P, Si, Ti, Zr, Hf, Cr, Mo ou W, et des mélanges de ceux-ci.

6. Procédé selon la revendication 5, selon lequel le matériau à activité de cathode est en outre revêtu de carbone, d'oxydes, ou de phosphates.

7. Cellule électrochimique **caractérisée en ce qu'**elle comprend :
une électrode constituée de latex hybride d'acrylique et de fluor, selon laquelle des polymères d'acrylate et de fluor sont hybridés en une particule et de telles particules sont dispersées dans une solution aqueuse, avec de l'oxyde de lithium nickel cobalt d'aluminium ou du titanate de lithium, en combinaison avec de la CMC et du PVDF et comprenant en outre un adjuvant filmogène choisi dans le groupe comprenant du carbonate de vinylène, du carbonate d'éthylène de vinyle, du sulfone de propane.

8. Cellule électrochimique selon la revendication 7, comprenant un adjuvant réducteur de gaz choisi dans le groupe comprenant des hétérocycles contentant de l'azote, tels que le pyrrole, la 2-méthyl-1-pyrroline, la 1-méthylpyrroline et la 1-vinyl-2-pyrrolidinone, la pyridine, la 2-picoline, la 3-picoline, la 4-picoline, la 2-vinylpyridine, la 4-vinylpyridine, et la diméthyl-pyridine-amine (DMPA) et le complexe de borane-pyridine ou des mélanges de ceux-ci ou des composés aminés aromatiques tels que l'aniline, la toluidine, la diphénylamine, la naphtylamine, les alkylanilines, la dialkylaniline.

9. Cellule électrochimique selon l'une quelconque des revendications 7 ou 8, selon laquelle l'électrolyte de la cellule électrochimique comprend un sel d'électrolyte, un solvant d'électrolyte et un adjuvant d'électrolyte.

10. Cellule électrochimique selon l'une quelconque des revendications 7 à 9, selon lequel le sel d'électrolyte est choisi dans le groupe comprenant du perchlorate de lithium (LiClO₄), de l'hexafluorophosphate de lithium (LiFP₆), du tétrafluoroborate de lithium (LiBF₄), de l'hexafluoroarséniate de lithium (LiAsF₆), de l'hexafluoroantimonate de lithium (LiSbF₆), du trifluorométhanesulfonate de lithium (LiCF₃SO₃), du bis[(trifluorométhyl)sulfonyl]imide de lithium (LiN(CF₃SO₂)₂), du bis[(pentafluoroéthyl)sulfonyl]imide de lithium (LiN(C₂F₅SO₂)₂), du bisoxalatoborate de lithium (LiBOB), du difluorooxalatoborate de lithium (LidFOB), du trifluoro-tris(pentafluoroéthyl)phosphate de lithium (LiFAP) et du tétraphénylborate de lithium (Li(C₆H₅)₄B).

11. Cellule électrochimique selon l'une quelconque des revendications 7 à 10, selon laquelle le solvant d'électrolyte est choisi dans le groupe comprenant du carbonate d'éthylène (EC), du carbonate de propylène (PC), du carbonate de vinylène (VC), du carbonate linéaire tel que les carbonates de diméthyle (DMC), du carbonate de diéthyle (DEC), du carbonate d'éthyl-méthyle (EMC), des éthers cycliques tels que du tétrahydrofurane (THF) et du 2-méthyltétrahydrofurane (2-Me-THF), des éthers linéaires tels que du diméthoxyéthane (DME), des lactones telles que la γ-butyrolactone (GBF), la valérolactone, l'acétonitrile et le sulfolane et des mélanges de ceux-ci.

12. Utilisation d'une électrode préparée par un procédé selon l'une quelconque des revendications 1 à 6 dans des produits électroniques de grande consommation, des applications stationnaires telles que le stockage d'énergie renouvelable, du nivellement de réseau électrique, de grands moteurs hybrides au diesel, des véhicules militaires hybrides électriques (HEV-s), et des applications aérospatiales.
